# FASCICULE DE BREVET EUROPEEN

(11) **EP 3 347 320 B1**
(45) Date de publication et mention de la délivrance du brevet: **19.02.2020**
(21) Numéro de dépôt: 16775789.7
(22) Date de dépôt: 06.09.2016
(51) Int. Cl.: C03C 17/00, B60J 1/00, B60J 1/02, C03C 17/42

(54) **VITRAGE DE VÉHICULE DE TRANSPORT A REVÊTEMENT DEPERLANT ET ANTI-POUSSIERE ASSOCIE A UN APPAREIL DE DÉTECTION**
TRANSPORTFAHRZEUGVERGLASUNG MIT WASSERABWEISENDER UND STAUBSCHUTZBESCHICHTUNG IN VERBINDUNG MIT EINEM DETEKTOR
TRANSPORT VEHICLE GLAZING WITH WATER REPELLENT AND ANTI-DUST COATING ASSOCIATED WITH A DETECTION DEVICE

(30) Priorité: 07.09.2015 FR 1558264
(43) Date de publication de la demande: 18.07.2018
(73) Titulaire: Saint-Gobain Glass France, 92400 Courbevoie (FR)
(72) Inventeur: BRUDIEU, Barbara, 75013 Paris (FR); GUILLEMOT, François, 75019 Paris (FR); TEISSEIRE, Jérémie, 92160 Antony (FR)
(74) Mandataire: Saint-Gobain Recherche
(86) Numéro de dépôt international: PCT/FR2016/052208
(87) Numéro de publication internationale: WO 2017/042469

(56) Documents cités:
- WO-A1-2009/118552
- US-A- 5 415 927

## Description

L'invention concerne un vitrage de véhicule de transport à travers lequel opère un appareil de détection tel que caméra de sécurité / détection d'obstacle / anti-collision, ou similaire, placé à l'intérieur du véhicule, notamment sur la face du vitrage.

Les inventeurs ont cherché comment garantir une propreté maximale et durable de la face du vitrage destinée à être exposée à l'atmosphère extérieure, dans sa zone en vis-à-vis de l'appareil de détection. Ils ont recherché des systèmes fonctionnels à propriétés déperlantes (faible hystérèse, c'est-à-dire faible différence entre l'angle d'avancée et l'angle de reculée d'une goutte d'eau sur le substrat incliné, et angle de contact élevé) grâce à un revêtement hydrophobe parfaitement plan. Ainsi vise-t-on l'obtention d'un vitrage à haute et durable transparence, à la surface extérieure duquel glissent les liquides comme l'eau ce qui implique des propriétés anti-poussières et antibuée.

Ce but est atteint par l'invention qui a pour objet un vitrage de véhicule de transport comprenant, sur sa surface destinée à être exposée à l'atmosphère extérieure, au moins dans une zone non balayée par les essuie-glaces, une couche de silice de 0,1 à 20 µm d'épaisseur, dont 50 à 90 % du volume sont constitués de pores ouverts de 20 à 300 nm, répartis de façon homogène dans toute l'épaisseur de la couche, et qui pour leur quasi-totalité sont connectés les uns aux autres, la surface externe et interne de la couche étant fonctionnalisée par un composé à fonction perfluoroalkyle ou alkyle, puis saturée en une huile hydrophobe qui imprègne la couche poreuse fonctionnalisée et forme un film à la surface de celle-ci, ladite au moins une zone étant en vis-à-vis d'un appareil de détection tel que caméra de sécurité / détection d'obstacle / anti-collision, ou similaire, placé à l'intérieur du véhicule, notamment sur la face du vitrage, l'huile hydrophobe étant choisie parmi celles décrites dans la revendication 1.

Par « surface interne » de la couche, on entend ici la surface des pores.

L'huile hydrophobe imprègne la couche poreuse de silice et forme un film à la surface de celle-ci grâce à l'affinité (liaisons non covalentes) avec le composé à fonction perfluoroalkyle ou alkyle greffé à la surface des pores (ce greffage modifie la tension de surface (interne et externe) de la couche de silice). Cela conduit à une couche plane hydrophobe de nature liquide et/ou hémi-liquide hémi-solide. La couche poreuse permet d'avoir un maintien de l'huile hydrophobe durable grâce à son imprégnation dans la couche poreuse (une huile hydrophobe sur du verre n'est pas aussi performante en matière de propriété glissante).

Etonnamment le revêtement complexe du vitrage de l'invention est durable et compatible avec les conditions exigeantes d'utilisation d'un pare-brise de véhicule automobile, par exemple, assurant la pérennité du fonctionnement optimal d'une caméra de détection d'obstacle ou similaire.

La surface externe du vitrage a d'excellentes propriétés de glissement de l'eau, ainsi que d'évacuation des poussières par le glissement de l'eau, et antibuée.

La fabrication du revêtement complexe selon l'invention est réalisable sur de grandes surfaces, et ses paramètres tels que fraction de volume de pores, adhésion sont aisément maîtrisables.

Selon d'autres caractéristiques, certaines étant seulement préférées, du vitrage de l'invention:
- la couche est en silice; la couche poreuse étant faite de silice et étant de préférence non rugueuse, a un indice de réfraction faible (d'environ 1,15 à 1,30 à une longueur d'onde de 600 nm) ce qui permet d'avoir un système transparent sur verre (pas de diffraction ou de diffusion de la lumière) ;
- au moins 50 % du volume de la couche sont constitués de pores ;
- de préférence au plus 80 % du volume de la couche sont constitués de pores ;
- les dimensions de pores sont de préférence d'au moins 30, de préférence 40 et de manière particulièrement préférée 50 nm ;
- les dimensions de pores sont de préférence d'au plus 200 nm ;
- l'huile hydrophobe est choisie parmi les hydrocarbures perfluorés ou les silicones organiques, par exemple élastomères, les perfluoropolyéthers, perfluoroalkyléthers et perfluorocycloéthers, perfluoroalkylamines tertiaires, perfluoroalkylsulfures et perfluoroalkylsulfoxydes, perfluoroalkylphosphines et leurs produits d'oxydation, acides carboxyliques perfluorés, acides sulfoniques et phosphoniques fluorés, silanes fluorés, seuls ou en mélange de plusieurs d'entre eux.

L'invention a également pour objet un procédé de fabrication d'un vitrage tel que décrit précédemment, caractérisé en ce qu'il comprend les opérations consistant successivement à
- déposer sur un substrat verrier une composition liquide d'agent porogène et de précurseur(s) de silice,
- calciner l'ensemble obtenu de manière à éliminer l'agent porogène et former une couche poreuse condensée sur le substrat,
- greffer à la surface externe et interne de la couche poreuse un composé à fonction perfluoroalkyle ou alkyle, puis
- couler une huile hydrophobe de ceux décrits ci-dessus en excès sur le substrat maintenu incliné pour évacuer l'excès d'huile du substrat.

Selon des caractéristiques préférées de ce procédé :
- les précurseurs de silice conjointement mis en œuvre sont le glycidoxypropyltriméthoxysilane (GLYMO) et le tétraéthoxysilane (TEOS) ; l'utilisation de GLYMO comme précurseur permet d'obtenir des couches relativement épaisses (épaisseurs supérieures à 1,5 µm) exemptes de fissures avec un volume de pores relativement élevé, supérieur à 50 % ;
- l'agent porogène est choisi parmi un latex de particules acryliques telles que polyméthacrylate de méthyle (PMMA), ou une émulsion de polymère (méth)acrylique ;
- la composition liquide d'agent porogène et de précurseur(s) de silice est déposée sur le substrat par rouleau, pulvérisation, trempage, sérigraphie (avec ajustement de la rhéologie) ou impression par exemple par jet d'encre;
- le composé à fonction perfluoroalkyle a pour formule générale

   (I) F₃C-(CF₂)ₘ-(CH₂)ₙ-SiX₃₋ₚRₚ

   dans laquelle
   - m = 0 à 15, de préférence 5 à 11 et de manière particulièrement préférée au plus 9 ;
   - n = 1 à 5, de préférence n = 2 ;
   - p = 0, 1 ou 2, de préférence 0 ou 1 et de manière particulièrement préférée 0 ;
   - R est un groupe alkyle ou un atome d'hydrogène ; et
   - X représente un groupe hydrolysable tel qu'hydroxy ou alkoxy, en particulier éthoxy, méthoxy, ou halogénure ;
   ou consiste en un perfluoropolyéthersilane du type représenté par la formule générale 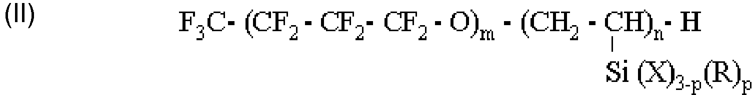 ou par la formule générale 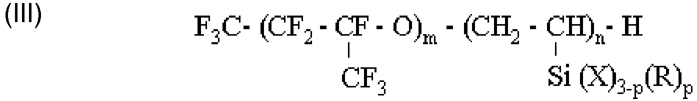 dans lesquelles :
   - m = 2 à 30
   - n = 1 à 3, de préférence n = 1
   - p = 0, 1 ou 2, de préférence 0 ou 1, et de manière particulièrement préférée 0;
   - R est un groupe alkyle ou un atome d'hydrogène ; et
   - X est un groupement hydrolysable tel qu'hydroxy ou alkoxy, en particulier éthoxy, méthoxy, ou halogénure ;
   ou bien encore consiste en un perfluoropolyéther portant un groupe alkoxysilane à deux extrémités, notamment tel que commercialisé sous la marque enregistrée Fluorolink® par la société Solvay ;
- préalablement au greffage du composé à fonction perfluoroalkyle ou alkyle, la surface externe et interne de la couche poreuse est hydrophile, et le précurseur de greffage à fonction perfluoroalkyle ou alkyle est hydrolysé de manière à condenser avec la surface de la couche pour obtenir le greffage.

Un autre objet de l'invention consiste en l'application d'un vitrage tel que décrit ci-dessus, comme pare-brise de véhicule de transport terrestre, notamment automobile ou ferroviaire, aérien ou aquatique.

L'invention sera mieux comprise à la lumière de l'exemple de réalisation suivant.

### Exemple

On prépare une solution de glycidoxypropyltriméthoxysilane (GLYMO) en mélangeant 10 g de GLYMO et 2,25 g de solution de HCl à pH=2, sous agitation à température ambiante pendant 2h environ.

On prépare une solution de tétraéthoxysilane (TEOS) en mélangeant 4 g de TEOS et 6 g de solution de HCl à pH=2, sous agitation à température ambiante pendant 2h environ.

On prépare un sol GLYMO-TEOS en mélangeant 1 part de sol de GLYMO à 2 parts de sol de TEOS (en masse).

On prépare la solution à déposer en mélangeant 0,98 g de sol GLYMO-TEOS préparé ci-dessus, 0,59 g d'émulsion de polymère méthacrylique commercialisé sous la marque enregistrée NeoCryl® XK-52 par la société DSM, 3,4 g de solution de HCl à pH=2, et 0,5 % en masse de tensioactif fluoré commercialisé sous la marque enregistrée Novec® FC-4430 par la société 3M.

Cette solution est déposée au rouleau sur un échantillon de verre flotté silicosodocalcique de 10 cm X 10 cm et 4 mm d'épaisseur.

L'échantillon est calciné à 450 °C pendant... dans le but de dégrader l'agent porogène (NeoCryl® XK-52). On obtient une couche de silice poreuse condensée de 1,7 µm d'épaisseur, exempte de fissure ou craquèlement, de 60 % de porosité, avec des pores de 60 nm qui sont quasiment tous connectés les uns aux autres dans toute l'épaisseur du revêtement.

On prépare ensuite un mélange de 213 µl de 1H,1H,2H,2H-perfluorodécyltriéthoxysilane (désigné ci-après par SiF7) répondant à la formule F₃C-(CF₂)₇-(CH₂)₂-Si(OC₂H₅)₃, 9 g d'isopropanol (IPA) et 1 g d'HCl 0,1N. Ce mélange est à pH=1. SiF7 y est hydrolysé, c'est-à-dire que chacun des trois groupes éthoxy y est remplacé par un groupe hydroxy OH.

La surface de la couche de silice poreuse condensée préparée ci-dessus est rendue hydrophile par un traitement UV-ozone de 60 minutes à 50 °C, puis le mélange de SiF7 hydrolysé préparé ci-dessus est chiffonné (c'est-à-dire déposé au moyen d'un chiffon imbibé) à la surface de la couche poreuse hydrophile afin que les groupements Si-OH de SiF7 condensent avec ceux de la couche poreuse en formant des liaisons Si-O-Si. Au lieu d'un chiffonnage, on peut aussi employer une pulvérisation pour déposer le mélange de SiF7 hydrolysé.

L'échantillon est ensuite recuit à 150 °C pendant 30 à 60 minutes.

Sur la couche poreuse ainsi fonctionnalisée par SiF7, on coule en excès une huile perfluoropolyéther répondant à la formule

F-(CFCF₃-CF₂-O)ₙ-CF₂CF₃

avec n compris entre 10 et 60,
de viscosité 12,6 cP,
commercialisée par la société Du Pont sous la marque enregistrée Krytox GL 100 ®. L'échantillon est maintenu incliné pour évacuer l'excès d'huile du substrat. La quantité d'huile retenue par celui-ci est au moins égale à 0,5 ml / cm².

Une goutte d'eau sur la surface du revêtement constitué de la couche poreuse + SiF7 + Krytox®, ne s'étale pas et glisse même lorsque l'échantillon est à plat. Le revêtement est hydrophobe et le liquide fluoré, immiscible à l'eau empêche toute accroche de la goutte par force capillaire. Une inclinaison faible (5°) suffit pour que la goutte glisse hors de l'échantillon sans laisser de trace.

Le revêtement glissant est durable en deux points :
- L'huile fluorée reste longtemps imprégnée dans la couche poreuse bien qu'elle soit fluide et qu'elle soit sans doute emportée en faible quantité par les gouttes d'eau glissant à la surface. Un volume d'eau de 200ml versé goutte à goutte en un même point de la surface de l'échantillon, n'amenuise pas les propriétés glissantes.
- Un nettoyage du revêtement ou une utilisation très longue durée implique un retrait progressif de l'huile. Néanmoins, celle-ci peut être réappliquée facilement à la surface de l'échantillon (revêtu de la couche poreuse fonctionnalisée avec des restes d'huile) afin de lui permettre de recouvrer des performances équivalentes à la première utilisation.

Par ailleurs, cette propriété glissante confère au revêtement des fonctions anti-poussière et d'antigel.

Le revêtement glissant avec une couche macroporeuse est très intéressant pour le vitrage où la transparence est requise et où des fonctionnalités anti-traces, anti-poussières et/ou antigel sont souhaitées. Il est particulièrement intéressant, dans le cadre de l'invention, pour revêtir la zone du pare-brise des voitures derrière laquelle se trouve la caméra de détection d'obstacle (de plus en plus couramment utilisée par les constructeurs automobiles), ou équivalent.

## Revendications

1. Vitrage de véhicule de transport comprenant, sur sa surface destinée à être exposée à l'atmosphère extérieure, au moins dans une zone non balayée par les essuie-glaces, une couche de silice de 0,1 à 20 µm d'épaisseur, dont 50 à 90 % du volume sont constitués de pores ouverts de 20 à 300 nm, répartis de façon homogène dans toute l'épaisseur de la couche, et qui pour leur quasi-totalité sont connectés les uns aux autres, dans lequel la surface interne de la couche est définie comme la surface des pores, la surface externe et interne de la couche étant fonctionnalisée par un composé à fonction perfluoroalkyle ou alkyle, puis saturée en une huile hydrophobe qui imprègne la couche poreuse fonctionnalisée et forme un film à la surface de celle-ci, ladite au moins une zone étant en vis-à-vis d'un appareil de détection tel que caméra de sécurité / détection d'obstacle / anti-collision, ou similaire, placé à l'intérieur du véhicule, notamment sur la face du vitrage, l'huile hydrophobe étant choisie parmi les hydrocarbures perfluorés ou les silicones organiques, par exemple élastomères, les perfluoropolyéthers, perfluoroalkyléthers et perfluorocycloéthers, perfluoroalkylamines tertiaires, perfluoroalkylsulfures et perfluoroalkylsulfoxydes, perfluoroalkylphosphines et leurs produits d'oxydation, acides carboxyliques perfluorés, acides sulfoniques et phosphoniques fluorés, silanes fluorés, seuls ou en mélange de plusieurs d'entre eux.

2. Vitrage selon la revendication 1, **caractérisé en ce qu'**au plus 80 % du volume de la couche sont constitués de pores.

3. Vitrage selon l'une des revendications précédentes, **caractérisé en ce que** les dimensions de pores sont d'au moins 30, de préférence 40 et de manière particulièrement préférée 50 nm.

4. Vitrage selon l'une des revendications précédentes, **caractérisé en ce que** les dimensions de pores sont d'au plus 200 nm..

5. Procédé de fabrication d'un vitrage selon l'une des revendications précédentes, **caractérisé en ce qu'**il comprend les opérations consistant successivement à
- déposer sur un substrat verrier une composition liquide d'agent porogène et de précurseur(s) de silice,
- calciner l'ensemble obtenu de manière à éliminer l'agent porogène et former une couche poreuse condensée sur le substrat,
- greffer à la surface externe et interne de la couche poreuse un composé à fonction perfluoroalkyle ou alkyle, la surface interne de la couche étant définie comme la surface des pores, puis
- couler une huile hydrophobe en excès sur le substrat maintenu incliné pour évacuer l'excès d'huile du substrat, l'huile hydrophobe étant choisie parmi les hydrocarbures perfluorés ou les silicones organiques, par exemple élastomères, les perfluoropolyéthers, perfluoroalkyléthers et perfluorocycloéthers, perfluoroalkylamines tertiaires, perfluoroalkylsulfures et perfluoroalkylsulfoxydes, perfluoroalkylphosphines et leurs produits d'oxydation, acides carboxyliques perfluorés, acides sulfoniques et phosphoniques fluorés, silanes fluorés, seuls ou en mélange de plusieurs d'entre eux.

6. Procédé selon la revendication 5, **caractérisé en ce que** les précurseurs de silice conjointement mis en œuvre sont le glycidoxypropyltriméthoxysilane et le tétraéthoxysilane.

7. Procédé selon la revendication 5 ou 6, **caractérisé en ce que** l'agent porogène est choisi parmi un latex de particules acryliques telles que polyméthacrylate de méthyle, ou une émulsion de polymère (méth)acrylique.

8. Procédé selon l'une des revendications 5 à 7, **caractérisé en ce que** la composition liquide d'agent porogène et de précurseur(s) de silice est déposée sur le substrat par rouleau, pulvérisation, trempage, sérigraphie (avec ajustement de la rhéologie) ou impression par jet d'encre.

9. Procédé selon l'une des revendications 5 à 8, **caractérisé en ce que** le perfluoroalkylsilane a pour formule générale
(I) F₃C-(CF₂)ₘ-(CH₂)ₙ-SiX₃₋ₚRₚ
dans laquelle
- m = 0 à 15, de préférence 5 à 11 et de manière particulièrement préférée au plus 9 ;
- n = 1 à 5, de préférence n = 2 ;
- p = 0, 1 ou 2, de préférence 0 ou 1 et de manière particulièrement préférée 0 ;
- R est un groupe alkyle ou un atome d'hydrogène ; et
- X représente un groupe hydrolysable tel qu'hydroxy ou alkoxy, en particulier éthoxy, méthoxy, ou halogénure ;
ou consiste en un perfluoropolyéthersilane du type représenté par la formule générale 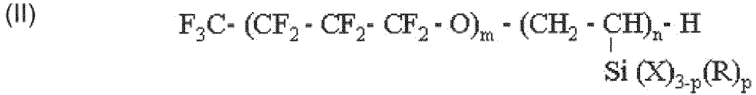 ou par la formule générale 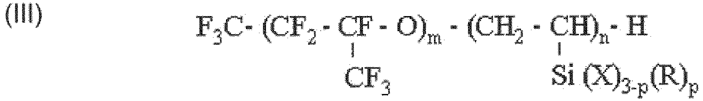 dans lesquelles :
- m = 2 à 30
- n = 1 à 3, de préférence n = 1
- p = 0, 1 ou 2, de préférence 0 ou 1, et de manière particulièrement préférée 0;
- R est un groupe alkyle ou un atome d'hydrogène ; et
- X est un groupement hydrolysable tel qu'hydroxy ou alkoxy, en particulier éthoxy, méthoxy, ou halogénure ;
ou bien encore consiste en un perfluoropolyéther portant un groupe alkoxysilane à deux extrémités.

10. Procédé selon l'une des revendications 5 à 9, **caractérisé en ce que** préalablement au greffage du perfluoroalkylsilane ou alkylsilane, la surface externe et interne de la couche poreuse est hydrophile, et **en ce que** le précurseur de greffage de perfluoroalkylsilane ou alkylsilane est hydrolysé de manière à condenser avec la surface de la couche pour obtenir le greffage.

11. Application d'un vitrage selon l'une des revendications 1 à 4, comme pare-brise de véhicule de transport terrestre, notamment automobile ou ferroviaire, aérien ou aquatique.

## Patentansprüche

1. Transportfahrzeugverglasung, umfassend, auf ihrer Fläche, die dazu bestimmt ist, der Außenatmosphäre ausgesetzt zu werden, in mindestens einer Zone, die nicht von Scheibenwischern gewischt wird, eine Schicht aus Siliciumdioxid mit einer Dicke von 0,1 bis 20 µm, von der 50 bis 90 % des Volumens aus offenen Poren mit 20 bis 300 nm bestehen, die homogen in der gesamten Dicke der Schicht verteilt sind, und die nahezu in ihrer Gesamtheit miteinander verbunden sind, wobei die Innenfläche der Schicht als Oberfläche der Poren definiert ist, wobei die Außen- und Innenfläche der Schicht durch eine Verbindung mit einer Perfluoralkyl- oder Alkyl-Funktion funktionalisiert wird, dann mit einem hydrophoben Öl gesättigt wird, das die funktionalisierte poröse Schicht imprägniert und einen Film an der Oberfläche derselben bildet, wobei sich die mindestens eine Zone gegenüber eines Detektors befindet, wie einer Sicherheits- / Hindernisdetektions-/ Antikollisionskamera oder Ähnlichem, die im Inneren des Fahrzeugs, insbesondere auf seiner Verglasungsfläche, platziert ist, wobei das hydrophobe Öl ausgewählt ist aus perfluorierten Kohlenwasserstoffen oder organischen Silikonen, zum Beispiel Elastomeren, Perfluorpolyethern, Perfluoralkylethern und Perfluorcycloethern, tertiären Perfluoralkylaminen, Perfluoralkylsulfiden und Perfluoralkylsulfoxiden, Perfluoralkylphosphinen und ihren Oxidationsprodukten, perfluorierten Carbonsäuren, fluorierten Sulfon- und Phosphonsäuren, fluorierten Silanen, allein oder in Mischung mit mehreren davon.

2. Verglasung nach Anspruch 1,
**dadurch gekennzeichnet, dass** höchstens 80 % des Volumens der Schicht aus Poren bestehen.

3. Verglasung nach einem der vorhergehenden Ansprüche,
**dadurch gekennzeichnet, dass** die Abmessungen der Poren mindestens 30, vorzugsweise 40 und besonders bevorzugt 50 nm betragen.

4. Verglasung nach einem der vorhergehenden Ansprüche,
**dadurch gekennzeichnet, dass** die Abmessungen der Poren höchstens 200 nm betragen.

5. Verfahren zur Herstellung einer Verglasung nach einem der vorhergehenden Ansprüche,
**dadurch gekennzeichnet, dass** es die Vorgänge umfasst, die aufeinanderfolgend bestehen aus:
- Abscheiden einer flüssigen Zusammensetzung von einem porogenen Mittel und (einem) Vorläufer(n) von Siliciumdioxid auf einem Glassubstrat,
- Calcinieren der erhaltenen Anordnung, um das porogene Mittel zu eliminieren und eine kondensierte poröse Schicht auf dem Substrat zu bilden,
- Pfropfen, auf der Außen- und Innenfläche der porösen Schicht, einer Verbindung mit einer Perfluoralkyl- oder Alkyl-Funktion, wobei die Innenfläche der Schicht als Oberfläche der Poren definiert wird, dann
- Gießen eines hydrophoben Öls im Überschuss auf das geneigt gehaltene Substrat, um den Überschuss an Öl von dem Substrat abzuleiten, wobei das hydrophobe Öl ausgewählt wird aus perfluorierten Kohlenwasserstoffen oder organischen Silikonen, zum Beispiel Elastomeren, Perfluorpolyethern, Perfluoralkylethern und Perfluorcycloethern, tertiären Perfluoralkylaminen, Perfluoralkylsulfiden und Perfluoralkylsulfoxiden, Perfluoralkylphosphinen und ihren Oxidationsprodukten, perfluorierten Carbonsäuren, fluorierten Sulfon- und Phosphonsäuren, fluorierten Silanen, allein oder in Mischung mit mehreren davon.

6. Verfahren nach Anspruch 5,
**dadurch gekennzeichnet, dass** die Vorläufer von Siliciumdioxid, die gemeinsam verwendet werden, Glycidoxypropyltrimethoxysilan und Tetraethoxysilan sind.

7. Verfahren nach Anspruch 5 oder 6,
**dadurch gekennzeichnet, dass** das porogene Mittel ausgewählt wird aus einem Latex von Acryl-Partikeln, wie Polymethylmethacrylat, oder einer Polymer(meth)acryl-Emulsion.

8. Verfahren nach einem der Ansprüche 5 bis 7,
**dadurch gekennzeichnet, dass** die flüssige Zusammensetzung von dem porogenen Mittel und dem (den) Vorläufer(n) von Siliciumdioxid auf dem Substrat durch eine Rolle, Zerstäuben, Eintauchen, Siebdruck (mit Einstellung der Rheologie) oder Aufdrucken durch einen Tintenstrahl abgeschieden wird.

9. Verfahren nach einem der Ansprüche 5 bis 8,
**dadurch gekennzeichnet, dass** das Perfluoralkylsilan die allgemeine Formel aufweist:
(I) F₃C-(CF₂)ₘ-(CH₂)ₙ-SiX₃₋ₚRₚ,
wobei
- m = 0 bis 15, vorzugsweise 5 bis 11 und besonders bevorzugt höchstens 9;
- n = 1 bis 5, vorzugsweise n = 2;
- p = 0, 1 oder 2, vorzugsweise 0 oder 1 und besonders bevorzugt 0;
- R eine Alkylgruppe oder ein Wasserstoffatom ist; und
- X eine hydrolysierbare Gruppe darstellt, wie Hydroxy oder Alkoxy, insbesondere Ethoxy, Methoxy oder Halogenid;
oder besteht aus einem Perfluorpolyethersilan des Typs, der dargestellt wird durch die allgemeine Formel: 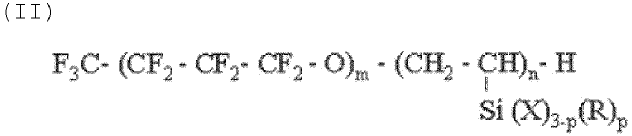 oder durch die allgemeine Formel: 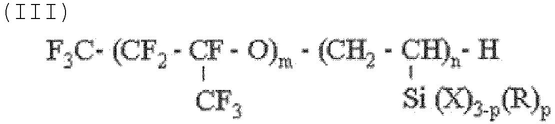 wobei:
- m = 2 bis 30;
- n = 1 bis 3, vorzugsweise n = 1;
- p = 0, 1 oder 2, vorzugsweise 0 oder 1 und besonders bevorzugt 0;
- R eine Alkylgruppe oder ein Wasserstoffatom ist; und
- X eine hydrolysierbare Gruppe ist, wie Hydroxy oder Alkoxy, insbesondere Ethoxy, Methoxy oder Halogenid;
oder auch besteht aus einem Perfluorpolyether, der eine Alkoxysilangruppe an zwei Enden trägt.

10. Verfahren nach einem der Ansprüche 5 bis 9, **dadurch gekennzeichnet, dass**, vor dem Pfropfen des Perfluoralkylsilans oder Alkylsilans, die Außen- und Innenfläche der porösen Schicht hydrophil ist, und dadurch, dass der Vorläufer des Pfropfens von Perfluoralkylsilan oder Alkylsilan derart hydrolysiert wird, dass er mit der Fläche der Schicht kondensiert, um das Pfropfen zu erhalten.

11. Verwendung einer Verglasung nach einem der Ansprüche 1 bis 4, als Windschutzscheibe eines Landtransportfahrzeugs, insbesondere eines Automobil- oder Eisenbahn-, Luft- oder Wasserfahrzeugs.

## Claims

1. Transport vehicle glazing comprising, on its surface intended to be exposed to the exterior atmosphere, at least in a zone not wiped by the windscreen wipers, a silica layer of 0.1 to 20 µm thickness, 50 to 90% of the volume of which consists of 20 to 300 nm open pores that are distributed uniformly throughout the thickness of the layer, and almost all of which are connected to one another, wherein the internal surface of the layer is defined as the surface of the pores, the internal and external surface of the layer being functionalized with a compound containing a perfluoroalkyl or alkyl functional group, then saturated with a hydrophobic oil that impregnates the functionalized porous layer and forms a film on the surface thereof, said at least one zone being located facing a detecting device such as an anti-collision/obstacle-detecting/security video camera, or similar, placed in the interior of the vehicle, in particular on the face of the glazing, the hydrophobic oil being chosen from one of or a blend of two or more of the following: perfluorinated hydrocarbons or organic silicones, elastomers for example; perfluoropolyethers, perfluoroalkylethers and perfluorocycloethers; tertiary perfluoroalkylamines; perfluoroalkylsulfides and perfluoroalkylsulfoxides; perfluoroalkylphosphines and their oxidation products; perfluorinated carboxylic acids; fluorinated phosphonic and sulfonic acids; and fluorinated silanes.

2. Glazing according to Claim 1, **characterized in that**
at most 80% of the volume of the layer consists of pores.

3. Glazing according to one of the preceding claims, **characterized in that** the pores are at least 30, preferably 40 and particularly preferably 50 nm in size.

4. Glazing according to one of the preceding claims, **characterized in that** the pores are at most 200 nm in size.

5. Process for manufacturing a glazing according to one of the preceding claims, **characterized in that** it comprises the operations consisting in succession in:
- depositing on a glazing substrate a liquid pore-forming agent composition and silica precursor(s);
- calcinating the obtained assembly so as to remove the pore-forming agent and form a condensed porous layer on the substrate;
- grafting onto the external and internal surface of the porous layer a compound containing a perfluoroalkyl or alkyl functional group, the internal surface of the layer being defined as the surface of the pores, then
- pouring an excess of hydrophobic oil onto the substrate, the substrate being held inclined in order to remove excess oil from the substrate, the hydrophobic oil being chosen from one of or a blend of two or more of the following: perfluorinated hydrocarbons or organic silicones, elastomers for example; perfluoropolyethers, perfluoroalkylethers and perfluorocycloethers; tertiary perfluoroalkylamines; perfluoroalkylsulfides and perfluoroalkylsulfoxides; perfluoroalkylphosphines and their oxidation products; perfluorinated carboxylic acids; fluorinated phosphonic and sulfonic acids; and fluorinated silanes.

6. Process according to Claim 5, **characterized in that** the silica precursors conjointly implemented are glycidoxypropyltrimethoxysilane and tetraethoxysilane.

7. Process according to Claim 85 or 6, **characterized in that** the pore-forming agent is chosen from a latex of acrylic particles, such as particles of polymethyl methacrylate, or a meth(acrylic) polymer emulsion.

8. Process according to one of Claims 5 to 7, **characterized in that** the liquid pore-forming agent composition and silica precursor(s) are deposited on the substrate by roller, spraying, dip-coating, screen printing (with adjustment of the rheology) or inkjet printing.

9. Process according to one of Claims 5 to 8, **characterized in that** the perfluoroalkylsilane has the general formula:
(I) F₃C-(CF₂)ₘ-(CH₂)ₙ-SiX₃₋ₚRₚ
in which
- m = 0 to 15, preferably 5 to 11 and particularly preferably at most 9;
- n = 1 to 5 and preferably n = 2;
- p = 0, 1 or 2, preferably 0 or 1 and particularly preferably 0;
- R is an alkyl group or a hydrogen atom; and
- X represents a hydrolysable group such as a hydroxy or alkoxy group and in particular an ethoxy, methoxy or halide group;
or consists of a perfluoropolyethersilane of the type represented by the general formula 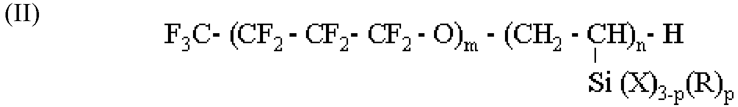 or by the general formula 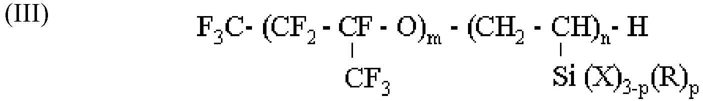 in which:
- m = 2 to 30;
- n = 1 to 3 and preferably n = 1;
- p = 0, 1 or 2, preferably 0 or 1 and particularly preferably 0;
- R is an alkyl group or a hydrogen atom; and
- X is a hydrolysable group such as a hydroxy or alkoxy group and in particular an ethoxy, methoxy or halide group;
or indeed consists of a perfluoropolyether bearing an alkoxysilane group at two ends.

10. Process according to one of Claims 5 to 9, **characterized in that**, before the perfluoroalkylsilane or alkylsilane is grafted, the internal and external surface of the porous layer is hydrophilic, and **in that** the graft precursor of the perfluoroalkylsilane or alkylsilane is hydrolyzed so as to condense with the surface of the layer to obtain the graft.

11. Application of a glazing unit according to one of Claims 1 to 4 to a windshield of a ground transport vehicle, in particular an automobile, or to a windshield of a rail, air or water transport vehicle.
